# FASCICULE DE BREVET EUROPEEN

(11) **EP 2 962 334 B1**
(45) Date de publication et mention de la délivrance du brevet: **30.11.2016**
(21) Numéro de dépôt: 14713208.8
(22) Date de dépôt: 03.03.2014
(51) Int. Cl.: H01L 31/052

(54) **PROCEDE ET DISPOSITIF DE REGULATION THERMIQUE DE PANNEAUX PHOTOVOLTAIQUES**
VERFAHREN UND VORRICHTUNG ZUR STEUERUNG DER TEMPERATUR VON FOTOVOLTAIKKOLLEKTOREN
METHOD AND DEVICE FOR CONTROLLING THE TEMPERATURE OF PHOTOVOLTAIC PANELS

(30) Priorité: 01.03.2013 FR 1351860
(43) Date de publication de la demande: 06.01.2016
(73) Titulaire: Sunibrain, 31300 Toulouse (FR)
(72) Inventeur: CRISTI GONZALEZ, Nicolas, F-31700 Cornebarrieu (FR); MACQ, André, L-1363 Howald (LU)
(74) Mandataire: Cabinet Plasseraud
(86) Numéro de dépôt international: PCT/FR2014/050459
(87) Numéro de publication internationale: WO 2014/132010

(56) Documents cités:
- KR-A- 20090 071 895
- US-A1- 2011 049 992

## Description

### Domaine technique

La présente invention concerne des procédés et dispositifs de régulation thermique. Elle est relative au domaine du photovoltaïque. Plus particulièrement, elle concerne les procédés et dispositifs permettant de réguler la température de panneaux photovoltaïques.

### Technique antérieure

L'exploitation photovoltaïque de l'énergie solaire consiste à convertir directement le rayonnement solaire en électricité. Elle utilise pour cela des panneaux photovoltaïques qui réalisent cette transformation d'énergie. Néanmoins, avec une conversion maximale actuellement de l'ordre de 15%, cette énergie est majoritairement dissipée en chaleur pour environ 80%, tandis que l'énergie restante est réfléchie pour environ 5%. Ainsi, durant l'été par exemple, la température d'un panneau photovoltaïque peut monter à plus de 70°C.
Le document KR20090071895A décrit un procédé de régulation d'une pluralité de panneaux photvoltaïques.

Il est connu qu'une telle augmentation de la température d'un panneau photovoltaïque se traduit notamment par une baisse de la puissance électrique mesurée en sortie du panneau mais également par un déplacement du point de puissance maximale du panneau photovoltaïque. Dans ces conditions, une perte du rendement de conversion comprise entre 14% et 39% peut être observée.

Ainsi, en l'absence d'un système de régulation approprié, la température d'utilisation d'un panneau photovoltaïque peut provoquer une perte de rendement importante.

Il est connu d'abaisser la température de panneaux photovoltaïques par écoulement d'un liquide sur une installation photovoltaïque dans laquelle les panneaux photovoltaïques sont disposés côte à côte en rangées verticales et/ou horizontales suivant, par exemple, la pente d'une toiture. Pour cela, on applique un liquide, par exemple de l'eau, depuis la partie la plus haute de l'installation photovoltaïque, sur la surface des panneaux photovoltaïques. Le liquide s'écoule ainsi d'un panneau photovoltaïque à un autre jusqu'à atteindre la partie la plus basse de l'installation photovoltaïque.

Cette solution nécessite une installation photovoltaïque comprenant des panneaux photovoltaïques disposés de manière contiguë le long des rangées verticales et/ou horizontales suivant, par exemple, la pente d'une toiture, de sorte que le bord inférieur d'un panneau photovoltaïque supérieur recouvre le bord supérieur d'un panneau photovoltaïque inférieur dans une rangée ou bien qu'un joint étanche complète et unifie le plan formé par les panneaux et ce, afin que l'écoulement se poursuive sur l'ensemble des panneaux photovoltaïques. Or, pour la plupart, les installations photovoltaïques comprennent des panneaux photovoltaïques présentant un espacement de l'ordre d'un ou plusieurs centimètres entre des panneaux photovoltaïques pris deux à deux, et ce essentiellement pour des raisons pratiques liées aux techniques et accessoires de montages les plus répandus sur le marché. Par ailleurs, cette solution nécessite que les panneaux de l'installation photovoltaïque soient disposés selon un angle suffisant pour permettre l'écoulement de l'eau sur les panneaux. Ainsi, la solution du refroidissement par écoulement n'est pas applicable à tous les types d'installations photovoltaïques.

Il est aussi connu d'abaisser la température d'un panneau photovoltaïque par atomisation d'un liquide sur la face supérieure du panneau photovoltaïque, comme décrit par exemple dans le document FR2977981. Néanmoins, cette solution n'est efficace qu'en l'absence presque totale de vent. En effet, en présence de vent, même relativement infime, les particules du liquide générées par atomisation sont majoritairement emportées par le vent avant même qu'elles n'aient pu abaisser la température de l'air ambiant ni entrer en contact avec la surface du panneau photovoltaïque afin d'en abaisser la température.

### Exposé de l'invention

La présente invention vise à pallier les inconvénients de l'art antérieur en proposant un procédé et un dispositif de régulation thermique des panneaux photovoltaïques en présence de vent.

De plus, la présente invention sera avantageusement adaptable à la majorité des installations photovoltaïques comportant des panneaux photovoltaïques.

A cet effet, selon l'invention, il est visé un procédé de régulation thermique d'une pluralité de panneaux photovoltaïques exposés au vent et comprenant une pluralité de dispositifs de pulvérisation d'un liquide aptes à appliquer un liquide de refroidissement sur la pluralité de panneaux. Le procédé est caractérisé en ce qu'il comprend notamment les étapes consistant à :
- mesurer une température d'au moins un panneau ;
- mesurer la vitesse du vent ;
- activer la pulvérisation d'au moins un des dispositifs de pulvérisation de liquide lorsque :
   - la température mesurée est supérieure ou égale à une première valeur de température prédéterminée ; et,
   - la vitesse mesurée du vent est inférieure ou égale à une première valeur de vitesse du vent prédéterminée ;
- désactiver la pulvérisation de tout ou partie des dispositifs de pulvérisation de liquide lorsque :
   - la température mesurée est inférieure ou égale à une deuxième valeur de température prédéterminée, laquelle est inférieure à la première valeur de température prédéterminée ; et,
   - la vitesse mesurée du vent est supérieure ou égale à une deuxième valeur de vitesse du vent prédéterminée, laquelle est supérieure à la première valeur de vitesse du vent prédéterminée ;
le procédé étant tel qu'on asservit l'activation, la désactivation et/ou la pression de pulvérisation, de certains dispositifs de pulvérisation de liquide à la vitesse mesurée du vent et qu'on détermine un ou plusieurs instants d'activation et/ou de désactivation de la pulvérisation et la pression de pulvérisation d'au moins certains dispositifs de pulvérisation en se basant sur un algorithme de recherche des pics et des creux dans une modélisation de la vitesse du vent et/ou de la direction du vent.

Grâce à ces dispositions, le refroidissement dépend de la vitesse du vent et de la température de fonctionnement du panneau.

Ainsi, le liquide de refroidissement peut être utilisé quand une certaine vitesse du vent est mesurée de sorte que les gouttelettes formées par pulvérisation à partir du liquide puissent être appliquées sur la pluralité des panneaux photovoltaïques même en présence de vent.

Selon un mode de réalisation de l'invention:
- l'activation de la pulvérisation d'au moins certains dispositifs de pulvérisation de liquide est enclenchée si en outre une mesure d'un paramètre physique au niveau de la pluralité de panneaux est supérieure à une première valeur prédéterminée du paramètre physique ; et,
- la désactivation de la pulvérisation d'au moins certains dispositifs de pulvérisation de liquide est enclenchée si en outre la mesure du paramètre physique est inférieure ou égale à une deuxième valeur prédéterminée du paramètre physique, laquelle est inférieure à la première valeur prédéterminée du paramètre physique. Dans ce mode de réalisation, le paramètre physique fait partie d'un groupe comportant :
- l'ensoleillement reçu au niveau de la pluralité de panneaux ;
- la production électrique produite par au moins un panneau ; et,
- le courant et/ou la tension électrique d'au moins un dispositif électrique couplé de manière fonctionnelle à au moins un panneau.

Il est avantageux de prendre en considération certains paramètres physiques afin par exemple de n'activer la pulvérisation que lorsque la connaissance de ces paramètres physiques rend la pulvérisation utile ou efficace, et/ou en vue d'éviter des dégâts que pourrait causer la pulvérisation. Par exemple, il est avantageux de prendre en considération la présence ou l'absence d'ensoleillement et/ou son intensité pour favoriser le refroidissement naturel des panneaux photovoltaïques tout en économisant le liquide de refroidissement. Il est également avantageux de prendre en considération le comportement électrique des équipements électriques connectés à la pluralité de panneaux.

Selon un autre mode de réalisation de l'invention, le procédé peut comprendre en outre l'étape consistant à :
- mesurer la direction du vent ;
le procédé étant tel qu'on asservit en outre :
- l'activation, la désactivation et/ou la pression de la pulvérisation d'au moins certains dispositifs de pulvérisation de liquide à la direction mesurée du vent.

Il est avantageux de pouvoir prendre en considération la direction du vent pour, par exemple, ne pas activer les dispositifs de pulvérisation de liquide qui sont trop exposés au vent ou bien pour ne pas activer les dispositifs de pulvérisation de liquide qui sont, dans l'acception marine de cette expression, « sous le vent » des panneaux photovoltaïques. Le liquide de refroidissement peut ainsi être économisé.

Selon un mode de réalisation de l'invention :
- l'activation de la pulvérisation d'au moins certains dispositifs de pulvérisation de liquide est enclenchée si en outre la différence entre, d'une part la température mesurée d'au moins un panneau et d'autre part une mesure de température de l'air ambiant au niveau de la pluralité de panneaux et/ou une mesure de la température du liquide de refroidissement avant pulvérisation est inférieure à une première valeur de différence prédéterminée ; et,
- la désactivation de la pulvérisation d'au moins certains dispositifs de pulvérisation de liquide est enclenchée si en outre la différence entre, d'une part la température mesurée d'au moins un panneau et d'autre part une mesure de température de l'air ambiant au niveau de la pluralité de panneaux et/ou la mesure de la température du liquide de refroidissement après pulvérisation est supérieure ou égale à une deuxième valeur de différence prédéterminée, laquelle est supérieure à la première valeur de différence prédéterminée.

Il est avantageux de pouvoir prendre en considération la température du liquide de refroidissement afin par exemple d'éviter qu'une pulvérisation abondante de liquide très froid n'impose aux panneaux photovoltaïques un choc thermique important.

Il est également avantageux de pouvoir prendre en considération la température de l'air ambiant afin par exemple de minimiser l'évaporation des gouttelettes en déplacement aérien lors de la pulvérisation.

Selon un des modes de réalisation de l'invention :
- l'activation de la pulvérisation d'au moins certains dispositifs de pulvérisation de liquide peut être enclenchée si en outre une mesure du débit de précipitation d'eau atmosphérique au niveau de la pluralité de panneaux est inférieure à une première valeur de débit de précipitation prédéterminée ; et,
- la désactivation de la pulvérisation d'au moins certains dispositifs de pulvérisation de liquide peut être enclenchée si en outre la mesure du débit de précipitation au niveau de la pluralité de panneaux est supérieure à une deuxième valeur de débit de précipitation prédéterminée, laquelle est supérieure à la première valeur de débit de précipitation prédéterminée.

Il est avantageux de pouvoir prendre en considération le débit de précipitation d'eau atmosphérique, par exemple pour favoriser le refroidissement naturel des panneaux photovoltaïques et/ou pour éviter le mélange d'eau de pluie avec le liquide de refroidissement.

Selon un autre mode de réalisation de l'invention, la mesure de la température d'au moins un panneau photovoltaïque peut consister à effectuer au moins une mesure au-dessus et au moins une mesure en-dessous du panneau.

Il est avantageux de pouvoir prendre en considération les températures au-dessus et/ou en-dessous du panneau, par exemple, afin de déterminer l'inertie thermique du panneau et d'y adapter le mode pulvérisation.

Selon un mode de réalisation de l'invention, on peut effectuer la mesure de la vitesse et de la direction du vent pendant un temps prédéfini afin de déterminer des valeurs statistiques du vent.

Il est avantageux de pouvoir détecter et/ou prévoir les pics et les creux et la direction du vent afin de permettre une utilisation économique du liquide de refroidissement.

Selon un des modes de réalisation de l'invention, dans le cas où les panneaux de la pluralité de panneaux photovoltaïques sont disjoints, c'est-à-dire séparés les uns des autres par un espace de par exemple quelques centimètres pour des raisons techniques relevant de la construction de tels ensembles, il est possible alors d'agencer les dispositifs de pulvérisation dans cet espace.

Il est avantageux de pouvoir agencer les dispositifs de pulvérisation dans l'espace situé entre les panneaux photovoltaïques, et/ou en périphérie d'une pluralité de panneaux photovoltaïques, afin par exemple d'éviter tout effet d'ombrage, et donc de perte d'énergie électrique, qu'entrainerait un dispositif monté sur la surface des panneaux photovoltaïques.

L'invention vise également un dispositif de régulation thermique d'une pluralité de panneaux photovoltaïques exposés au vent et comprenant une pluralité de dispositifs de pulvérisation d'un liquide aptes à appliquer un liquide de refroidissement sur la pluralité de panneaux. Le dispositif comprend :
- des moyens de mesure de la température d'au moins un panneau photovoltaïque ;
- des moyens de mesure de la vitesse du vent ;
- des moyens d'activation d'au moins un dispositif de pulvérisation d'un liquide ;
- des moyens de désactivation d'au moins un dispositif de pulvérisation ;
- des moyens d'asservissement de la pression d'au moins un dispositif de pulvérisation à la vitesse mesurée du vent ; et,
- un microcontrôleur couplé à au moins l'un des moyens :
   - de mesure de la température d'au moins un panneau photovoltaïque ;
   - de mesure de la vitesse du vent ;
   - d'activation d'au moins un dispositif de pulvérisation d'un liquide ;
   - de désactivation d'au moins un dispositif de pulvérisation ; et,
   - d'asservissement de la pression d'au moins un dispositif de pulvérisation à la vitesse mesurée du vent; le microcontrôleur étant configuré pour déterminer un ou plusieurs instants d'activation et/ou de désactivation de la pulvérisation et la pression de pulvérisation d'au moins certains dispositifs de pulvérisation en se basant sur un algorithme de recherche des pics et des creux dans une modélisation de la vitesse du vent et/ou de la direction du vent.

Selon un mode de réalisation de l'invention, le dispositif peut comprendre en outre, couplé au microcontrôleur, au moins l'un des moyens
- de mesure de l'ensoleillement reçu au niveau de la pluralité de panneaux ;
- de mesure de la production électrique produite par au moins un panneau ;
- de mesure du courant et/ou de la tension électrique délivré(e) ou absorbé(e) par au moins un panneau.

Dans ce mode de réalisation :
- l'activation de la pulvérisation d'au moins certains dispositifs de pulvérisation de liquide est enclenchée si en outre une mesure d'un paramètre physique au niveau de la pluralité de panneaux est supérieure à une première valeur prédéterminée du paramètre physique ; et,
- la désactivation de la pulvérisation d'au moins certains dispositifs de pulvérisation de liquide est enclenchée si en outre la mesure du paramètre physique est inférieure ou égale à une deuxième valeur prédéterminée du paramètre physique, laquelle est inférieure à la première valeur prédéterminée du paramètre physique. De plus, dans ce mode de réalisation, le paramètre physique fait partie d'un groupe comportant :
- l'ensoleillement reçu au niveau de la pluralité de panneaux ;
- la production électrique produite par au moins un panneau ; et,
- le courant et/ou la tension électrique d'au moins un dispositif électrique couplé de manière fonctionnelle à au moins un panneau.

Selon un autre mode de réalisation de l'invention, le dispositif peut comprendre en outre :
- des moyens de mesure de la direction du vent ; et,
- des moyens d'asservissement de l'activation, de la désactivation et/ou de la pression d'au moins un dispositif de pulvérisation à la direction mesurée du vent.

Selon un mode de réalisation de l'invention, le dispositif peut comprendre en outre au moins des moyens de mesure faisant partie du groupe comportant :
- des moyens de mesure de la température de l'air ambiant au niveau de la pluralité de panneaux ;
- des moyens de mesure de la température du liquide de refroidissement ; et,
- des moyens de mesure du débit de précipitation d'eau atmosphérique au niveau de la pluralité de panneaux.

Selon un autre mode de réalisation de l'invention, le dispositif peut comprendre en outre des moyens de stockage d'au moins une des mesures obtenues par les moyens de mesure.

Selon un des modes de réalisation de l'invention, les dispositifs de pulvérisation sont par exemple couplés à un ou plusieurs conduits hydrauliques permettant de transporter un liquide de refroidissement et faisant partie d'un système hydraulique.

### Description sommaire des dessins

D'autres modes de réalisation, buts et avantages de l'invention apparaîtront à la lecture de la description suivante d'un mode de réalisation de l'invention, donné à titre d'exemple non limitatif, en regard des dessins joints sur lesquels :
- la FIG. 1 montre schématiquement un exemple d'une installation photovoltaïque ;
- la FIG. 2 montre schématiquement une pluralité de panneaux photovoltaïques associés à un dispositif de refroidissement selon l'invention ;
- la FIG. 3 montre schématiquement un diagramme relatif à une mise en oeuvre du procédé par le dispositif de refroidissement selon un mode de réalisation de l'invention ; et,
- la FIG. 4 montre schématiquement un diagramme relatif à une mise en oeuvre du procédé par le dispositif de refroidissement selon un autre mode de réalisation de l'invention.

### Manière(s) de réaliser l'invention

Il est considéré que les dispositifs et principes de fonctionnement d'un panneau photovoltaïque et des installations photovoltaïques sont connus de l'homme du métier et ne seront donc pas détaillés davantage ici.

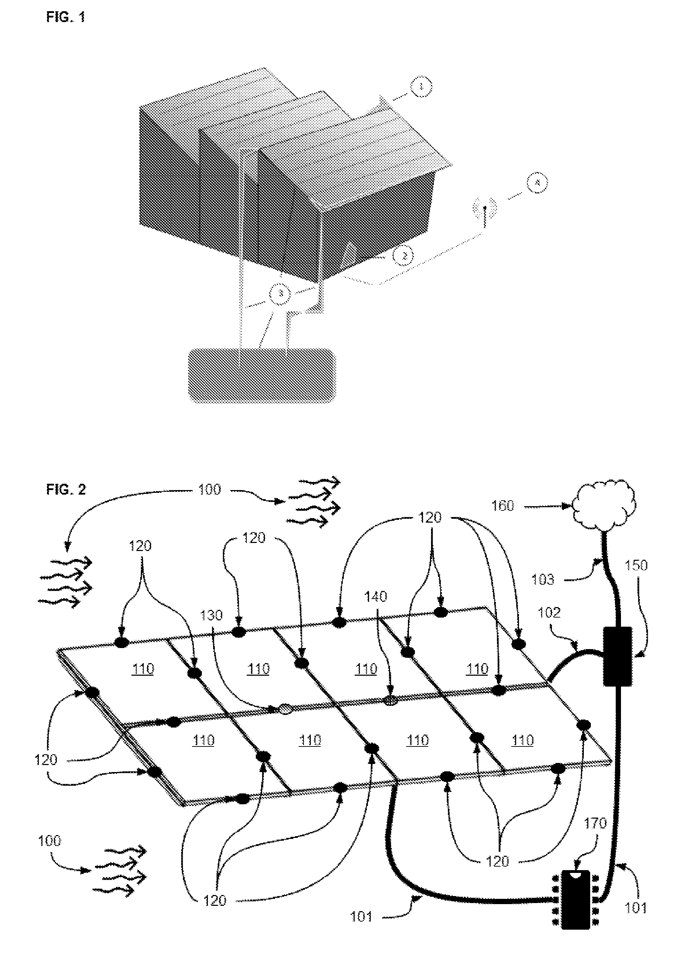

La FIG. 1 montre schématiquement un exemple d'une installation photovoltaïque installée sur une toiture d'une usine, l'installation photovoltaïque comprenant :
- un ensemble de sondes 1 telles que celles décrites ci-après ;
- un régulateur thermique 2 tel que celui décrit selon l'invention comme ci-après ;
- un système hydraulique 3 apte à faire circuler un liquide ; et,
- un système de communication 4 apte à faire circuler ou récupérer au moins une information correspondante à des données manipulées par le régulateur thermique.

Dans l'exemple de la FIG. 1, le système hydraulique 3 comprend un ensemble de pompes, de régulateurs de pression, de filtres et d'éléments de stockage du liquide de refroidissement. Cependant, le système hydraulique 3 peut également comprendre d'autres éléments.

Dans l'exemple de la FIG. 1, le système de communication 4 comprend une interface homme-machine pour commander le régulateur, des moyens de programmation du régulateur et des moyens de connexion à un réseau électrique ou téléphonique. Cependant, le système de communication 4 peut également comprendre d'autres éléments de communication.

L'exemple du dispositif de la FIG. 2 comprend :
- une pluralité de panneaux photovoltaïques 110 ;
- une pluralité de dispositifs de pulvérisation de liquide 120 ;
- un capteur thermométrique 130 ;
- un capteur anémométrique 140 ;
- un onduleur 150 ; et,
- une unité de commande telle un microcontrôleur 170.

Se référant à la FIG. 2, les panneaux photovoltaïques 110 sont disposés côte à côte en rangées verticales et/ou horizontales suivant la pente de la toiture de l'usine et présentent un espacement entre eux lorsque les panneaux photovoltaïques sont pris deux à deux. Dans cet exemple, la pluralité de dispositifs de pulvérisation de liquide 120 se fait mutuellement face selon un axe horizontal ou vertical de sorte qu'il y ait un dispositif de pulvérisation sur chaque côté des panneaux photovoltaïques 110.

Un dispositif de pulvérisation de liquide 120 peut présenter une buse ainsi qu'un organe de réglage permettant de réguler le flux de liquide traversant la sortie de la buse.

La pluralité de dispositifs de pulvérisation de liquide 120 est configurée pour appliquer un liquide de refroidissement sur la pluralité des panneaux photovoltaïques 110. Par exemple, le liquide de refroidissement peut être de l'eau de pluie récupérée dans une cuve couplée à un système hydraulique 3.

La pluralité de dispositifs de pulvérisation de liquide 120 est couplée à une interface 101 permettant d'assurer une liaison avec le microcontrôleur 170 ainsi que le contrôle de la pluralité de dispositifs de pulvérisation de liquide 120 par ce dernier.

Se référant à la FIG. 2, le capteur thermométrique 130 est configuré pour mesurer la température de fonctionnement de la pluralité de panneaux photovoltaïques 110.

Dans l'exemple de la FIG. 2, le capteur thermométrique 130 est associé à la pluralité de panneaux photovoltaïques 110 de sorte à mesurer leurs températures de fonctionnement. Le capteur thermométrique 130 est couplé à l'interface 101 permettant d'assurer une liaison avec le microcontrôleur 170 ainsi que le contrôle du capteur thermométrique 130 par ce dernier.

Se référant à la FIG. 2, le capteur anémométrique 140 est configuré pour mesurer la vitesse du vent auquel est exposée la pluralité de panneaux photovoltaïques 110. Dans cet exemple, le capteur anémométrique 140 est associé à la pluralité de panneaux photovoltaïques 110 de sorte à mesurer la vitesse du vent auquel les panneaux sont respectivement exposés. Le capteur anémométrique 140 est couplé à l'interface 101 permettant d'assurer une liaison avec le microcontrôleur 170 ainsi que le contrôle du capteur anémométrique 140 par ce dernier.

Se référant à la FIG. 2, l'onduleur 150 est configuré pour convertir le courant continu généré par la pluralité de panneaux photovoltaïques 110 en un courant alternatif adapté. En effet, les panneaux photovoltaïques produisent de l'électricité en courant continu comme les batteries, et non pas comme celle du secteur, qui est en France, par exemple, un courant alternatif à la fréquence de 50 Hz. Ainsi, pour alimenter des appareils en courant alternatif ou pour se connecter au secteur et y injecter l'électricité produite à partir de l'énergie photovoltaïque, il est utilisé un onduleur 150 pour réaliser cette opération de conversion.

Dans l'exemple de la FIG. 2, l'onduleur 150 est associé à la pluralité de panneaux photovoltaïques 110 via l'interface de couplage 102 de sorte à convertir le courant qu'ils ont respectivement généré. Il est clair pour l'homme du métier que l'interface de couplage 102 est configurée pour acheminer un courant continu généré par la pluralité de panneaux photovoltaïques 110. L'onduleur 150 est couplé à l'interface 103 permettant d'acheminer le courant converti vers le secteur 160 ou vers un ou plusieurs appareils électriques. Il est clair pour l'homme du métier que l'interface de couplage 103 est configurée pour acheminer un courant alternatif converti par l'onduleur 150. L'onduleur 150 est également couplé à l'interface 101 permettant d'assurer une liaison avec le microcontrôleur 170 ainsi que le monitoring et/ou le contrôle de l'onduleur 150 par ce dernier.

Selon l'invention, le couplage entre le microcontrôleur 170 et la pluralité de dispositifs de pulvérisation de liquide 120, le capteur thermométrique 130, le capteur anémométrique 140 et/ou l'onduleur 150 peut être un couplage physique de type filaire ou optique, par exemple via l'utilisation d'un bus selon le standard MODBUS ou Ethernet. En variante, le couplage peut être un couplage sans fil, par exemple par radiofréquence.

Se référant à la FIG. 2, le microcontrôleur 170 est configuré pour échanger un ou plusieurs signaux de données avec :
- la pluralité de dispositifs de pulvérisation de liquide 120 ;
- le capteur thermométrique 130 ;
- le capteur anémométrique 140 ; et
- l'onduleur 150.

Par exemple, l'échange de signaux de données avec les dispositifs de pulvérisation de liquide 120 permet au microcontrôleur 170 de contrôler l'organe de réglage permettant de réguler le flux de liquide traversant la sortie d'une buse.

Le microcontrôleur 170 est également configuré pour récupérer une ou plusieurs mesures de la température de fonctionnement d'un ou plusieurs panneaux photovoltaïques, mesures relevées par le capteur thermométrique 130 grâce, par exemple, à l'envoi de signaux de données au capteur thermométrique 130 où à l'envoi en continue ou de manière périodique de la température mesurée au microcontrôleur 170.

Il est également possible, par exemple, pour le microcontrôleur 170 de récupérer une ou plusieurs mesures de la vitesse du vent, mesures relevées par le capteur anémométrique 140, auquel sont exposés un ou plusieurs panneaux photovoltaïques grâce, par exemple, à l'envoi de signaux de données au capteur anémométrique 140 où à l'envoi en continu ou de manière périodique au microcontrôleur 170 de la mesure de la vitesse du vent.

Le microcontrôleur 170 peut aussi récupérer une ou plusieurs mesures de la production électrique d'un ou plusieurs panneaux photovoltaïques, mesures relevées par exemple au niveau de la sortie du panneau ou encore par l'onduleur 150, grâce, par exemple, à l'envoi de signaux de données à l'onduleur 150 où à l'envoi en continu ou de manière périodique au microcontrôleur 170 de la production électrique mesurée.

De plus, le microcontrôleur 170 est configuré pour exécuter des instructions provenant par exemple d'un support de stockage tel une mémoire ou une mémoire morte d'un ordinateur personnel (PC).

Plus précisément, le microcontrôleur 170 est configuré pour exécuter au moins une des opérations décrites ci-dessous selon un ou plusieurs modes de réalisation de l'invention.

Selon un mode de réalisation de l'invention, il est procédé à la régulation thermique d'une pluralité de panneaux photovoltaïques 110 exposés au vent 100.

Il est connu que le vent 100 occasionne, par dissémination, une perte d'un liquide atomisé au-dessus de la pluralité de panneaux photovoltaïques 110 avant même que les particules d'eau générées par atomisation n'aient pu abaisser la température de l'air ambiant ni entrer en contact avec la surface de la pluralité de panneaux photovoltaïques 110 afin d'en abaisser la température. Néanmoins, en utilisant des gouttelettes d'un liquide de refroidissement générées par exemple par pulvérisation et qui sont substantiellement plus grandes que les particules d'eau générées par atomisation, il est possible d'augmenter la capacité de refroidissement du liquide de refroidissement par lequel la surface de la pluralité de panneaux photovoltaïques aura été effectivement mouillée. En effet, le vent 100 facilite l'évaporation du liquide de refroidissement qui se produit principalement suite à l'entrée en contact du liquide de refroidissement avec la surface de la pluralité de panneaux photovoltaïques 110. Ce phénomène se traduit par un changement d'état qui est consommateur de calories et donc rafraichissant pour la surface de la pluralité de panneaux photovoltaïques 110.

Ainsi, l'un des objets de l'invention consiste en la régulation thermique de la pluralité de panneaux photovoltaïques 110 grâce à la pulvérisation d'un liquide de refroidissement d'une manière adaptée basée sur au moins une ou plusieurs mesures de la vitesse du vent auquel est exposée la pluralité de panneaux photovoltaïques 110, et ce sans occasionner des pertes importantes du liquide de refroidissement dues au phénomène de dissémination.

Pour cela le dispositif de régulation thermique comprend :
- la pluralité de dispositifs de pulvérisation d'un liquide 120, aptes à appliquer un liquide de refroidissement sur la pluralité de panneaux 110 ;
- le capteur thermométrique 130 apte à mesurer au moins une température de fonctionnement de la pluralité de panneaux 110 ;
- le capteur anémométrique 140 apte à mesurer au moins une vitesse du vent auquel est exposée la pluralité de panneaux 110 ; et,
- le microcontrôleur 170 couplé via l'interface 101 à la pluralité de dispositifs de pulvérisation d'un liquide 120, au capteur thermométrique 130 ainsi qu'au capteur anémométrique 140.

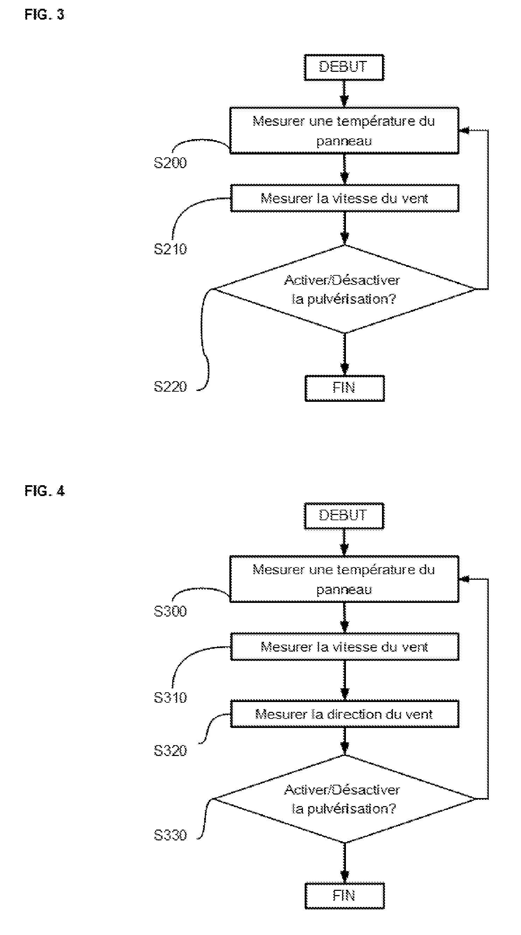

Le dispositif est configuré pour mettre en oeuvre un procédé de régulation thermique de la pluralité de panneaux 110 illustré par toutes les étapes décrites dans la figure FIG. 3.

Dans une première étape (S200), on mesure au moins une température d'au moins un panneau photovoltaïque 110, par exemple avec le capteur thermométrique 130. La fréquence de la mesure peut, par exemple, être commandée par le microcontrôleur 170.

Dans une deuxième étape (S210), on mesure la vitesse du vent auquel la pluralité de panneaux photovoltaïques 110 est exposée, par exemple avec le capteur anémométrique 140. La fréquence de la mesure peut, par exemple, être commandée par le microcontrôleur 170.

Dans une troisième étape (S220), on décide d'activer ou de désactiver la pulvérisation d'au moins un des dispositifs de pulvérisation de liquide 120, grâce par exemple au microcontrôleur 170. Plus précisément, il est possible d'activer la pulvérisation d'au moins un des dispositifs de pulvérisation de liquide 120 lorsque :
- la température mesurée est supérieure ou égale à une première valeur de température prédéterminée ; et,
- la vitesse mesurée du vent est inférieure ou égale à une première valeur de vitesse du vent prédéterminée.

Par exemple, une première valeur de température prédéterminée peut se situer aux alentours de 30°C et une première valeur de vitesse du vent prédéterminée peut se situer aux alentours de 0 m/s.

Il est également possible de désactiver la pulvérisation de tout ou partie des dispositifs de pulvérisation de liquide 120 lorsque :
- la température mesurée est inférieure ou égale à une deuxième valeur de température prédéterminée, laquelle est inférieure à la première valeur de température prédéterminée ; et,
- la vitesse mesurée du vent est supérieure ou égale à une deuxième valeur de vitesse du vent prédéterminée, laquelle est supérieure à la première valeur de vitesse du vent prédéterminée.

Par exemple, une deuxième valeur de température prédéterminée peut se situer aux alentours de 25°C et une deuxième valeur de vitesse du vent prédéterminée peut se situer aux alentours de 5 m/s.

Afin d'activer ou de désactiver tout ou partie des dispositifs de pulvérisation de liquide 120, le dispositif est configuré pour asservir l'activation, la désactivation et/ou la pression de pulvérisation de certains dispositifs de pulvérisation de liquide 120 à la vitesse mesurée du vent, grâce par exemple au microcontrôleur 170 et à l'interface 101.

Ainsi, par exemple, il est possible de désactiver tous les dispositifs de pulvérisation de liquide 120 si la vitesse mesurée du vent est supérieure à la deuxième valeur de vitesse du vent prédéterminée.

On pourra alors activer seulement, par exemple, les dispositifs de pulvérisation de liquide 120 se trouvant au centre de la pluralité de panneaux photovoltaïques. On pourra également réguler la pression de pulvérisation de certains dispositifs de pulvérisation de liquide 120 selon la vitesse du vent.

Par exemple, lorsque le vent est fort, il est préférable de pulvériser des gouttelettes de liquide de refroidissement lourdes en abaissant la pression de pulvérisation.

Par contre, lorsque le vent est faible, les inventeurs ont déterminé qu'il est préférable de pulvériser des gouttelettes de liquide de refroidissement fines en augmentant la pression de pulvérisation.

Selon un autre mode de réalisation de l'invention, le dispositif est configuré pour mettre en oeuvre un procédé de régulation thermique de la pluralité de panneaux 110 illustré par toutes les étapes décrites dans la figure FIG. 4.

Dans une première étape (S300), on mesure au moins une température d'au moins un panneau photovoltaïque 110, par exemple avec le capteur thermométrique 130. La fréquence de la mesure peut, par exemple, être commandée par le microcontrôleur 170.

Dans une deuxième étape (S310), on mesure la vitesse du vent auquel la pluralité de panneaux photovoltaïques 110 est exposée, par exemple avec le capteur anémométrique 140. La fréquence de la mesure peut, par exemple, être commandée par le microcontrôleur 170.

Dans une troisième étape (S320), on mesure la direction du vent auquel la pluralité de panneaux photovoltaïques 110 est exposée. Pour cela le dispositif de régulation thermique peut comprendre en outre des moyens de mesure de la direction du vent, comme une girouette par exemple. La fréquence de la mesure peut, par exemple, être commandée par le microcontrôleur 170.

Dans une quatrième étape (S330), on décide d'activer ou de désactiver la pulvérisation d'au moins un des dispositifs de pulvérisation de liquide 120 grâce par exemple au microcontrôleur 170.

Afin d'activer ou de désactiver tout ou partie des dispositifs de pulvérisation de liquide 120, le dispositif est configuré pour en outre asservir l'activation et/ou la désactivation de certains dispositifs de pulvérisation de liquide 120 à la direction mesurée du vent grâce par exemple au microcontrôleur 170 et à l'interface 101.

Plus précisément, il est possible de désactiver certains des dispositifs de pulvérisation de liquide 120 qui sont les plus exposés au vent en prenant en considération la vitesse mesurée du vent et la direction mesurée du vent.

On pourra alors activer seulement, par exemple, les dispositifs de pulvérisation de liquide 120 qui sont les moins exposés au vent en prenant en considération la vitesse mesurée du vent et la direction mesurée du vent.

Selon un autre mode de réalisation de l'invention, le procédé de régulation thermique de la pluralité de panneaux 110 peut être illustré par toutes les étapes suivantes :
- activer la pulvérisation d'au moins certains dispositifs de pulvérisation de liquide 120 si en outre une mesure d'un paramètre physique au niveau de la pluralité de panneaux est supérieure à une première valeur prédéterminée du paramètre physique ; et,
- désactiver la pulvérisation d'au moins certains dispositifs de pulvérisation de liquide 120 si en outre la mesure du paramètre physique est inférieure ou égale à une deuxième valeur prédéterminée du paramètre physique, laquelle est inférieure à la première valeur prédéterminée du paramètre physique.

Dans un exemple, le paramètre physique correspond à l'ensoleillement reçu au niveau de la pluralité de panneaux.

Ainsi, par exemple, si la température de fonctionnement d'un panneau photovoltaïque 110 est élevée et qu'un grand nuage se met à passer au-dessus du panneau photovoltaïque en coupant le rayonnement solaire, on peut désactiver la pulvérisation d'au moins certains dispositifs de pulvérisation de liquide 120 car le panneau va voir sa température s'abaisser naturellement du fait du faible ensoleillement. Pour cela le dispositif de régulation thermique peut comprendre en outre des moyens de mesure de l'ensoleillement reçu, comme un pyranomètre par exemple.

Dans un autre exemple, le paramètre physique correspond à la production électrique produite par au moins un panneau.

Ainsi, par exemple, si la température de fonctionnement d'un panneau photovoltaïque 110 est élevée et que la production électrique au niveau de l'onduleur 150 baisse, par exemple parce que le rayonnement solaire reçu au niveau du panneau photovoltaïque baisse, on peut désactiver la pulvérisation d'au moins certains dispositifs de pulvérisation de liquide 120, afin par exemple d'économiser le liquide, car le panneau n'est pas grand producteur d'électricité à ce moment.

Dans un autre exemple, le paramètre physique correspond à une mesure du courant et/ou de la tension électrique d'au moins un dispositif électrique couplé de manière fonctionnelle à au moins un panneau.

Ainsi, par exemple, la mesure peut se faire au niveau d'un ou de plusieurs points de mesures en combinaison tels que :
- au niveau de la terre et/ou de la masse d'au moins un panneau ;
- toute charge électrique alimentée en électricité par au moins un panneau tel un dispositif de transformation d'électricité (i.e. un onduleur) ou de stockage (i.e. un système de batteries électriques) ;
- un réseau électrique auquel est raccordé directement ou indirectement au moins un panneau.

Par exemple, au niveau d'un onduleur, si le courant et/ou la tension mesuré(e) est compris(e) ou s'approche des limites de fonctionnement « normal » de l'onduleur, et que l'on refroidit un ou plusieurs panneaux, alors on peut désactiver la pulvérisation d'au moins certains dispositifs de pulvérisation de liquide 120, afin de réduire le courant/la tension au niveau de l'onduleur pour éviter toute surchauffe ou autre désordre de cet appareil, et l'on peut au contraire réactiver la pulvérisation lorsque le courant et/ou la tension mesuré(e) est revenu(e) dans la limite de fonctionnement « normal » de l'onduleur. Dans un autre exemple, au niveau d'un dispositif de stockage d'électricité, tel par exemple une batterie, si le courant et/ou la tension mesuré(e) est compris(e) ou s'approche de la limite de saturation du stockage, et que l'on refroidit un ou plusieurs panneaux, alors on peut désactiver la pulvérisation d'au moins certains dispositifs de pulvérisation de liquide 120, afin d'éviter de pulvérisation inutilement du liquide, et l'on peut au contraire réactiver la pulvérisation lorsque le courant et/ou la tension mesuré(e) est inférieur(e) à la limite de saturation du stockage, afin d'accélérer le stockage (i.e. par exemple la charge de la batterie).

Selon un autre mode de réalisation de l'invention, le procédé de régulation thermique de la pluralité de panneaux 110 peut être illustré par toutes les étapes suivantes :
- activer la pulvérisation d'au moins certains dispositifs de pulvérisation de liquide 120 si en outre la différence entre, d'une part la température mesurée d'au moins un panneau et d'autre part une mesure de température de l'air ambiant au niveau de la pluralité de panneaux et/ou une mesure de la température du liquide de refroidissement avant pulvérisation est inférieure à une première valeur de différence prédéterminée.; et,
- désactiver la pulvérisation d'au moins certains dispositifs de pulvérisation de liquide 120 si en outre la différence entre, d'une part la température mesurée d'au moins un panneau et d'autre part une mesure de température de l'air ambiant au niveau de la pluralité de panneaux et/ou la mesure de la température du liquide de refroidissement après pulvérisation est supérieure ou égale à une deuxième valeur de différence prédéterminée, laquelle est supérieure à la première valeur de différence prédéterminée.
Pour cela le dispositif de régulation thermique peut comprendre en outre des moyens de mesure de la température de l'air ambiant et/ou des moyens de mesure de la température du liquide de refroidissement avant pulvérisation.

Ainsi, par exemple, si la température de l'air ambiant au niveau d'au moins un panneau photovoltaïque 110 est élevée, par exemple aux alentours de 35°C, par rapport à la température du panneau photovoltaïque 110, laquelle serait par exemple aux alentours de 25°C, on peut désactiver la pulvérisation d'au moins certains dispositifs de pulvérisation de liquide 120 car essayer d'abaisser la température de la pluralité de panneaux photovoltaïques 110 à un niveau inférieur à la température de l'air ambiant nécessiterait beaucoup de liquide de refroidissement. De ce fait, on activera la pulvérisation d'au moins certains dispositifs de pulvérisation de liquide 120 si la température de l'air ambiant est plutôt fraiche par rapport à la température du panneau photovoltaïque 110.

De même, par exemple, si la température du liquide de refroidissement avant pulvérisation est élevée, par exemple aux alentours de 30°C, par rapport à la température du panneau photovoltaïque 110, laquelle serait par exemple aux alentours de 25°C, on peut désactiver la pulvérisation d'au moins certains dispositifs de pulvérisation de liquide 120 car essayer d'abaisser la température de la pluralité de panneaux photovoltaïques 110 à un niveau trop inférieur à la température du liquide de refroidissement avant pulvérisation pourrait s'avérer inefficace. Par contre, on activera la pulvérisation d'au moins un des dispositifs de pulvérisation de liquide 120 lorsque la température du liquide de refroidissement est plutôt fraiche par rapport à la température du panneau photovoltaïque 110.

Cet exemple de mise en oeuvre comprend les cas où le liquide de refroidissement est recyclé pour aider à la régulation thermique des panneaux photovoltaïques, par exemple dans le cadre d'un système hydraulique 3 en cycle fermé. Cela peut être le cas, par exemple, pour de l'eau de pluie utilisée comme liquide de refroidissement. Dans ce cas de figure, l'eau de pluie qui est récupérée est un peu tiédie suite au contact avec les panneaux photovoltaïques. Ainsi, si l'on dispose d'une quantité limitée d'eau recyclée, celle-ci se réchauffe au fur et mesure du recyclage de sorte que l'on peut désactiver la pulvérisation d'au moins certains dispositifs de pulvérisation de liquide 120 si la température de l'eau et/ou celle de l'air ambiant est/sont élevées par rapport à la température du panneau photovoltaïque 110.

Selon un autre mode de réalisation de l'invention, le procédé de régulation thermique de la pluralité de panneaux 110 peut être illustré par toutes les étapes suivantes :
- activer la pulvérisation d'au moins certains dispositifs de pulvérisation de liquide 120 si en outre une mesure de température de l'air ambiant au niveau de la pluralité de panneaux est supérieure à la température de solidification du liquide de refroidissement ; et,
- désactiver la pulvérisation d'au moins certains dispositifs de pulvérisation de liquide 120 si en outre la mesure de température de l'air ambiant au niveau de la pluralité de panneaux est inférieure ou égale à la température de solidification du liquide de refroidissement.

Ainsi, par exemple, si la température de l'air ambiant au niveau d'au moins un panneau photovoltaïque 110 est inférieure à la température de solidification du liquide, on peut désactiver la pulvérisation d'au moins certains dispositifs de pulvérisation de liquide 120 car le liquide de refroidissement risque de geler. De ce fait, on activera la pulvérisation d'au moins certains dispositifs de pulvérisation de liquide 120 que lorsque la température de l'air ambiant est supérieure à la température de solidification du liquide.

Selon un autre mode de réalisation de l'invention, le procédé de régulation thermique de la pluralité de panneaux 110 peut être illustré par toutes les étapes suivantes :
- activer la pulvérisation d'au moins certains dispositifs de pulvérisation de liquide 120 si en outre une mesure du débit de précipitation d'eau atmosphérique au niveau de la pluralité de panneaux est inférieure à une première valeur de débit de précipitation d'eau atmosphérique prédéterminée ; et,
- désactiver la pulvérisation d'au moins certains dispositifs de pulvérisation de liquide 120 si en outre la mesure du débit de précipitation d'eau atmosphérique au niveau de la pluralité de panneaux est supérieure à une deuxième valeur de débit de précipitation d'eau atmosphérique prédéterminée, laquelle est supérieure à la première valeur de débit de précipitation d'eau atmosphérique prédéterminée.

Ainsi, par exemple, on désactivera la pulvérisation d'au moins certains dispositifs de pulvérisation de liquide 120 s'il pleut abondamment tandis que l'on activera la pulvérisation d'au moins certains dispositifs de pulvérisation de liquide 120 si le débit de précipitation d'eau atmosphérique est nul ou peu élevé, par exemple.

Selon un autre mode de réalisation de l'invention, le dispositif est configuré pour mesurer la température d'au moins un panneau en effectuant au moins une mesure au-dessus et au moins une mesure en-dessous du panneau.

En effet, il est connu que lorsque le rayonnement solaire est reçu au niveau d'un panneau photovoltaïque, la face du dessus du panneau photovoltaïque chauffe vite tandis que la face du dessous chauffe beaucoup moins vite.

Ainsi, il est approprié par exemple d'activer la pulvérisation d'au moins certains dispositifs de pulvérisation de liquide 120 quand le panneau photovoltaïque possède la face du dessus qui est chaude, même si la face du dessous n'est encore que tiède. Et il pourra être approprié, même si la face du dessus est devenue fraiche, de continuer la pulvérisation jusqu'à ce que la face du dessous soit également devenue fraiche. Dans cet exemple, des capteurs de température sont installés au-dessus et au-dessous de la pluralité des panneaux photovoltaïques.

Selon un autre mode de réalisation de l'invention, le dispositif est configuré pour mesurer la vitesse et la direction du vent pendant un temps prédéfini afin de déterminer des valeurs statistiques du vent. Il est clair pour l'homme du métier que d'autres statistiques, telles la variance ou l'écart-type peuvent être pris en considération. Ainsi, il est également possible de comparer une vitesse/direction instantanée du vent à une vitesse/direction moyenne, ou à d'autres résultats d'analyse statistique, pour décider de l'activation ou de la désactivation d'au moins certains dispositifs de pulvérisation de liquide 120, et/ou de la pression de pulvérisation.

Selon un autre mode de réalisation de l'invention, le dispositif est configuré pour déterminer un ou plusieurs instants d'activation et/ou de désactivation de la pulvérisation et la pression de pulvérisation, d'au moins certains dispositifs de pulvérisation en se basant sur un algorithme de recherche des pics et des creux dans une modélisation de la vitesse du vent et/ou de la direction du vent. Dans cet exemple de mise en oeuvre, l'activation ou la désactivation d'au moins certains dispositifs de pulvérisation de liquide 120, ainsi que la pression de pulvérisation, se base sur la détection de la cyclicité du vent, par exemple au cours de la journée. Ces cycles sont généralement marqués par une modification directionnelle du vent simultanée à une diminution temporaire de la force du vent. Ainsi, une fois les cycles identifiés en durée par exemple, il est souvent possible de prédire approximativement l'apparition des occurrences suivantes et de détecter plus précisément leur survenance en observant les modifications de la direction du vent. Ainsi, il sera possible par exemple, sur la base d'un moment prédit d'une occurrence et pour une durée prédite de l'occurrence, de comparer une vitesse/direction instantanée du vent à une vitesse/direction moyenne pendant l'occurrence prédite pour décider de l'activation ou de la désactivation d'au moins certains dispositifs de pulvérisation de liquide 120, et/ou de la pression de pulvérisation.

Selon un autre mode de réalisation de l'invention, le dispositif est configuré pour fonctionner avec des panneaux photovoltaïques disjoints par un espace dans lequel sont agencés les dispositifs de pulvérisation. Dans cet exemple, les dispositifs de pulvérisation de liquide 120 sont couplés à un ou plusieurs conduits hydrauliques installés entre et/ou sous les panneaux photovoltaïques 110. Ces conduits sont configurés pour transporter le liquide de refroidissement et font partie du système hydraulique.

Selon un autre mode de réalisation de l'invention, le dispositif est configuré pour moduler les stratégies d'activation ou de désactivation d'au moins certains dispositifs de pulvérisation de liquide 120, en fonction d'un niveau de réserve de liquide de refroidissement disponible.

Selon un mode de réalisation de l'invention, tout ou partie des paramètres météorologiques et physiques utilisés plus haut pour activer ou désactiver au moins certains dispositifs de pulvérisation de liquide 120, il est possible d'utiliser des services en ligne météorologiques accessibles par exemple par radiofréquences ou bien par le réseau Internet via le microcontrôleur 170.

Selon un autre mode de réalisation de l'invention, le dispositif est configuré pour déterminer un ou plusieurs instants d'activation et/ou de désactivation de la pulvérisation et la pression de pulvérisation, d'au moins certains dispositifs de pulvérisation en se basant sur un algorithme de recherche des taux probables de dissémination et d'évaporation du liquide dans une modélisation des composantes du phénomène de l'évapo-dissémination.

Selon les inventeurs, le concept de l'évapo-dissémination est à rapprocher du concept de "l'évapo-transpiration" utilisé par exemple en hydrologie ou dans l'agriculture. Dans ce phénomène, décrit par exemple par l'équation de Penman-Monteith, la composante de transpiration est remplacée par la dissémination, car les panneaux photovoltaïques 110 ne transpirent pas comme les plantes le font. Dans cet exemple de mise en oeuvre, l'activation ou la désactivation d'au moins certains dispositifs de pulvérisation de liquide 120 se base sur la prédiction des taux probables de dissémination et d'évaporation dans une modélisation des composantes du phénomène de l'évapo-dissémination. La dissémination peut, par exemple, dépendre des caractéristiques du vent, de la morphologie de la pluralité de panneaux photovoltaïques et de leur position dans l'espace, ainsi que des caractéristiques physiques de l'aspersion. L'évaporation, quant à elle, peut dépendre par exemple de l'hygrométrie, ainsi que de la température et de la pyranométrie au niveau de la pluralité de panneaux photovoltaïques.

Il est précisé que l'ordre des étapes du procédé, objet de l'invention, peut être modifié. Par exemple, la mesure de la vitesse du vent et/ou de la direction du vent peut être effectuée avant la mesure de la température d'au moins un des panneaux.

Les exemples divulgués ci-dessus et les formes de réalisations particulières représentées dans les figures doivent être compris comme une illustration des principes de la présente invention, et ne devraient pas être interprétés comme une limitation de son but, la portée duquel est uniquement définie par les revendications ci-jointes.

Par exemple, l'invention a été présentée dans le cadre d'une installation photovoltaïque installée sur toiture d'une usine, mais il va de soi que l'invention peut également être mise oeuvre dans d'autres endroits, par exemple sur la toiture d'une maison ou bien dans le cadre d'une installation photovoltaïque au sol. Aussi, l'activation ou la désactivation des dispositifs de pulvérisation a été présentée comme étant fonction de mesure(s) égale(s), inférieure(s) ou supérieure(s) à une valeur prédéterminée, mais il va de soi que l'activation ou la désactivation peut également être fonction de mesure(s) différente(s) de la valeur prédéterminée.

De plus, dans un mode de réalisation de l'invention, les panneaux photovoltaïques sont disposés côte à côte en rangées verticales et/ou horizontales suivant la pente de la toiture de l'usine de façon à ce que le bord inférieur d'un panneau photovoltaïque supérieur recouvre le bord supérieur d'un panneau photovoltaïque inférieur dans une rangée ou bien qu'un joint étanche complète et unifie le plan formé par les panneaux.

Dans un autre mode particulier de l'invention, la pluralité de panneaux photovoltaïques peut être remplacée par un panneau photovoltaïque de grandes dimensions.

Dans un mode de réalisation de l'invention, d'autres dispositions de la pluralité de dispositifs de pulvérisation de liquide différents de celle qui a été décrite sont envisageables. Par exemple, il est envisageable d'utiliser des dispositifs de pulvérisation de liquide capable de pulvériser un liquide s'appliquant sur un ou plusieurs panneaux photovoltaïques en même temps ou successivement.

Dans un mode de réalisation de l'invention, le liquide de refroidissement peut être tout liquide adapté au refroidissement d'un panneau photovoltaïque.

Dans un autre mode de réalisation de l'invention, au moins un capteur thermométrique est associé à chaque panneau photovoltaïque ou à des sous-ensembles de panneaux photovoltaïques de sorte à pouvoir mesurer sa température de fonctionnement de manière indépendante des autres panneaux photovoltaïques.

Dans un mode de réalisation de l'invention, au moins un capteur anémométrique est associé à chaque panneau photovoltaïque ou à des sous-ensembles de panneaux photovoltaïques de sorte à pouvoir mesurer la vitesse du vent auquel il est exposé de manière indépendante des autres panneaux photovoltaïques.

Dans un mode de réalisation de l'invention, au moins un onduleur est associé à chaque panneau photovoltaïque ou à des sous-ensembles de panneaux photovoltaïques via une interface de couplage de sorte à pouvoir convertir le courant qu'il a généré de manière indépendante des autres panneaux photovoltaïques.

Dans un autre mode de réalisation, aucun onduleur n'est utilisé dans l'installation photovoltaïque et la production électrique de l'installation photovoltaïque est, par exemple, couplée à une batterie ou à un dispositif électrique configuré pour consommer un courant continu.

Dans un autre mode de réalisation, le microcontrôleur est configuré pour commander, par exemple, une pompe d'un système hydraulique, la pompe et le circuit étant configurés pour activer ou désactiver un ou plusieurs dispositifs de pulvérisation de liquide, et/ou en régler la pression de fonctionnement.

Par exemple, cette mise en oeuvre peut s'appliquer à un système hydraulique comprenant au moins deux circuits hydrauliques dont le premier est configuré pour contrôler une pluralité de dispositifs de pulvérisation de liquide disposés au milieu d'une toiture et le deuxième est configuré pour contrôler une pluralité de dispositifs de pulvérisation de liquide disposés en périphérie de la toiture.

Ainsi, par exemple, le microcontrôleur serait apte à :
- activer seulement le premier circuit hydraulique quand le vent est fort ; et,
- à activer le premier circuit hydraulique et le deuxième circuit hydraulique quand le vent est faible.

L'unité de commande a été présentée comme étant un microcontrôleur, néanmoins d'autres unités de commande telles un ordinateur, un microprocesseur, un calculateur, un automate réglable, un asservissement, qu'il soit électronique, mécanique et/ou électromécanique, ou une combinaison de telles unités de commandes, sont également dans le cadre de cette invention.

Dans un autre exemple de mise en oeuvre, pour une installation photovoltaïque de forme courante, rectangulaire ou parallélépipédique, le système hydraulique pourrait comprendre cinq circuits hydrauliques dont le premier est configuré pour contrôler une pluralité de dispositifs de pulvérisation de liquide disposés au centre de l'installation photovoltaïque et les quatre autres sont configurés pour contrôler chacun une pluralité de dispositifs de pulvérisation de liquide disposée respectivement sur un des quatre bords de l'installation photovoltaïque.

Ainsi, par exemple, le microcontrôleur serait apte à :
- activer l'ensemble des circuits hydrauliques quand le vent est faible.
- et, lorsque le vent est fort, à désactiver au moins celle ou celles des pluralités de dispositifs de pulvérisation qui se trouvent « sous le vent » de la pluralité de panneaux photovoltaïques.

## Revendications

1. Procédé de régulation thermique d'une pluralité de panneaux photovoltaïques (110) exposés au vent (100) et comprenant une pluralité de dispositifs de pulvérisation d'un liquide (120) aptes à appliquer un liquide de refroidissement sur la pluralité de panneaux, le procédé étant caractérisé en ce **qu**'il comprend les étapes consistant à :
- mesurer une température d'au moins un panneau ;
- mesurer la vitesse du vent ;
- activer la pulvérisation d'au moins un des dispositifs de pulvérisation de liquide lorsque :
- la température mesurée est supérieure ou égale à une première valeur de température prédéterminée ; et,
- la vitesse mesurée du vent est inférieure ou égale à une première valeur de vitesse du vent prédéterminée ;
- désactiver la pulvérisation de tout ou partie des dispositifs de pulvérisation de liquide lorsque :
- la température mesurée est inférieure ou égale à une deuxième valeur de température prédéterminée, laquelle est inférieure à la première valeur de température prédéterminée ; et,
- la vitesse mesurée du vent est supérieure ou égale à une deuxième valeur de vitesse du vent prédéterminée, laquelle est supérieure à la première valeur de vitesse du vent prédéterminée ;
le procédé étant tel qu'on asservit l'activation, la désactivation et/ou la pression de pulvérisation, de certains dispositifs de pulvérisation de liquide à la vitesse mesurée du vent et qu'on détermine un ou plusieurs instants d'activation et/ou de désactivation de la pulvérisation et la pression de pulvérisation d'au moins certains dispositifs de pulvérisation en se basant sur un algorithme de recherche des pics et des creux dans une modélisation de la vitesse du vent et/ou de la direction du vent.

2. Procédé selon la revendication 1, **caractérisé en ce que ;**
- l'activation de la pulvérisation d'au moins certains dispositifs de pulvérisation de liquide est enclenchée si en outre une mesure d'un paramètre physique au niveau de la pluralité de panneaux est supérieure à une première valeur prédéterminée du paramètre physique ; et,
- la désactivation de la pulvérisation d'au moins certains dispositifs de pulvérisation de liquide est enclenchée si en outre la mesure du paramètre physique est inférieure ou égale à une deuxième valeur prédéterminée du paramètre physique, laquelle est inférieure à la première valeur prédéterminée du paramètre physique ;
dans lequel :
le paramètre physique fait partie d'un groupe comportant :
- l'ensoleillement reçu au niveau de la pluralité de panneaux ;
- la production électrique produite par au moins un panneau ;et,
- le courant et/ou la tension électrique d'au moins un dispositif électrique couplé de manière fonctionnelle à au moins un panneau.

3. Procédé selon l'une quelconque des revendications 1 à 2, **caractérisé en ce qu**'il comprend en outre l'étape consistant à :
- mesurer la direction du vent ;
le procédé étant tel qu'on asservit en outre :
- l'activation, la désactivation et/ou la pression de la pulvérisation d'au moins certains dispositifs de pulvérisation de liquide à la direction mesurée du vent.

4. Procédé selon l'une quelconque des revendications 1 à 3, **caractérisé en ce que :**
- l'activation de la pulvérisation d'au moins certains dispositifs de pulvérisation de liquide est enclenchée si en outre la différence entre d'une part la température mesurée d'au moins un panneau et d'autre part une mesure de température de l'air ambiant au niveau de la pluralité de panneaux et/ou une mesure de la température du liquide de refroidissement avant pulvérisation est inférieure à une première valeur de différence prédéterminée ; et,
- la désactivation la pulvérisation d'au moins certains dispositifs de pulvérisation de liquide est enclenchée si en outre la différence entre d'une part la température mesurée d'au moins un panneau et d'autre part une mesure de température de l'air ambiant au niveau de la pluralité de panneaux et/ou la mesure de la température du liquide de refroidissement après pulvérisation est supérieure ou égale à une deuxième valeur de différence prédéterminée, laquelle est supérieure à la première valeur de différence prédéterminée.

5. Procédé selon l'une quelconque des revendications 1 à 4, **caractérisé en ce que :**
- l'activation de la pulvérisation d'au moins certains dispositifs de pulvérisation de liquide est enclenchée si en outre une mesure de température de l'air ambiant au niveau de la pluralité de panneaux est supérieure à la température de solidification du liquide de refroidissement ; et,
- la désactivation de la pulvérisation d'au moins certains dispositifs de pulvérisation de liquide est enclenchée si en outre la mesure de température de l'air ambiant au niveau de la pluralité de panneaux est inférieure ou égale à la température de solidification du liquide de refroidissement.

6. Procédé selon l'une quelconque des revendications 1 à 5, **caractérisé en ce que :**
- l'activation de la pulvérisation d'au moins certains dispositifs de pulvérisation de liquide est enclenchée si en outre une mesure du débit de précipitation d'eau atmosphérique au niveau de la pluralité de panneaux est inférieure à une première valeur de débit de précipitation d'eau atmosphérique prédéterminée ; et,
- la désactivation de la pulvérisation d'au moins certains dispositifs de pulvérisation de liquide est enclenchée si en outre la mesure du débit de précipitation d'eau atmosphérique au niveau de la pluralité de panneaux est supérieure à une deuxième valeur de débit de précipitation d'eau atmosphérique prédéterminée, laquelle est supérieure à la première valeur de débit de précipitation d'eau atmosphérique prédéterminée.

7. Procédé selon l'une quelconque des revendications 1 à 6, **caractérisé en ce que** la mesure de la température d'au moins un panneau consiste à effectuer au moins une mesure au-dessus et au moins une mesure en-dessous du panneau.

8. Procédé selon l'une quelconque des revendications 1 à 7, **caractérisé en ce qu'on** effectue la mesure de la vitesse et de la direction du vent pendant un temps prédéfini afin de déterminer des valeurs statistiques du vent.

9. Procédé selon l'une quelconque des revendications 1 à 8, **caractérisé en ce que** les panneaux de la pluralité de panneaux photovoltaïques sont disjoints par un espace dans lequel sont agencés les dispositifs de pulvérisation.

10. Dispositif de régulation thermique d'une pluralité de panneaux photovoltaïques (110) exposés au vent (100) et comprenant une pluralité de dispositifs de pulvérisation d'un liquide (120) aptes à appliquer un liquide de refroidissement sur la pluralité de panneaux, le dispositif étant **caractérisé en ce qu**'il comprend :
- des moyens de mesure de la température (130) d'au moins un panneau photovoltaïque ;
- des moyens de mesure de la vitesse du vent (140) ;
- des moyens d'activation d'au moins un dispositif de pulvérisation d'un liquide ;
- des moyens de désactivation d'au moins un dispositif de pulvérisation,
- des moyens d'asservissement de la pression d'au moins un dispositif de pulvérisation à la vitesse mesurée du vent ; et,
- un microcontrôleur couplé à au moins l'un des moyens :
- de mesure de la température d'au moins un panneau photovoltaïque ;
- de mesure de la vitesse du vent ;
- d'activation d'au moins un dispositif de pulvérisation d'un liquide ;
- de désactivation d'au moins un dispositif de pulvérisation ; et,
- d'asservissement de la pression d'au moins un dispositif de pulvérisation à la vitesse mesurée du vent ;
le microcontrôleur étant en outre configuré pour déterminer un ou plusieurs instants d'activation et/ou de désactivation de la pulvérisation et la pression de pulvérisation d'au moins certains dispositifs de pulvérisation en se basant sur un algorithme de recherche des pics et des creux dans une modélisation de la vitesse du vent et/ou de la direction du vent.

11. Dispositif selon la revendication 10, **caractérisé en ce qu'il** comprend, en outre, couplé au microcontrôleur, au moins l'un des moyens ;
- de mesure de l'ensoleillement reçu au niveau de la pluralité de panneaux ;
- de mesure de la production électrique produite par au moins un panneau ;
- de mesure du courant et/ou de la tension électrique d'au moins un dispositif électrique couplé de manière fonctionnelle à au moins un panneau ;
dans lequel :
- l'activation de la pulvérisation d'au moins certains dispositifs de pulvérisation de liquide est enclenchée si en outre une mesure d'un paramètre physique au niveau de la pluralité de panneaux est supérieure à une première valeur prédéterminée du paramètre physique ; et,
- la désactivation de la pulvérisation d'au moins certains dispositifs de pulvérisation de liquide est enclenchée si en outre la mesure du paramètre physique est inférieure ou égale à une deuxième valeur prédéterminée du paramètre physique, laquelle est inférieure à la première valeur prédéterminée du paramètre physique ;
et dans lequel :
le paramètre physique fait partie d'un groupe comportant :
- l'ensoleillement reçu au niveau de la pluralité de panneaux ;
- la production électrique produite par au moins un panneau ; et,
- le courant et/ou la tension électrique d'au moins un dispositif électrique couplé de manière fonctionnelle à au moins un panneau.

12. Dispositif selon l'une quelconque des revendications 10 à 11, **caractérisé** en ce **qu**'il comprend en outre :
- des moyens de mesure de la direction du vent ; et,
- des moyens d'asservissement de l'activation, de la désactivation et/ou de la pression d'au moins un dispositif de pulvérisation à la direction mesurée du vent.

13. Dispositif selon l'une quelconque des revendications 10 à 12, **caractérisé en ce qu**'il comprend en outre au moins des moyens de mesure faisant partie du groupe comportant :
- des moyens de mesure de la température de l'air ambiant au niveau de la pluralité de panneaux ;
- des moyens de mesure de la température du liquide de refroidissement ; et,
- des moyens de mesure du débit de précipitation d'eau atmosphérique au niveau de la pluralité de panneaux.

14. Dispositif selon l'une quelconque des revendications 10 à 13, **caractérisé en ce qu**'il comprend en outre des moyens de stockage d'au moins une des mesures obtenues par les moyens de mesure.

15. Dispositif selon l'une quelconque des revendications 10 à 14, **caractérisé en ce que** les dispositifs de pulvérisation sont couplés à un ou plusieurs conduits hydrauliques permettant de transporter un liquide de refroidissement et faisant partie d'un système hydraulique.

## Patentansprüche

1. Verfahren zur thermischen Regelung einer Vielzahl von Fotovoltaikplatten (110), die dem Wind (100) ausgesetzt sind und eine Vielzahl von Flüssigkeitszerstäubungsvorrichtungen (120) aufweisen, die geeignet sind zum Aufbringen einer Kühlflüssigkeit auf die Vielzahl der Platten, wobei das Verfahren
**dadurch gekennzeichnet ist,**
**dass** es die Schritte aufweist, die bestehen aus:
- Messen einer Temperatur von mindestens einer Platte;
- Messen der Windgeschwindigkeit;
- Aktivieren der Zerstäubung von mindestens einer der Flüssigkeitszerstäubungsvorrichtungen, wenn:
- die gemessene Temperatur größer oder gleich einem ersten vorbestimmten Temperaturwert ist; und
- die gemessene Windgeschwindigkeit kleiner oder gleich einem ersten vorbestimmten Windgeschwindigkeitswert ist;
- Deaktivieren der Zerstäubung von allen oder einem Teil der Flüssigkeitszerstäubungsvorrichtungen, wenn:
- die gemessene Temperatur kleiner oder gleich einem zweiten vorbestimmten Temperaturwert ist, der kleiner als der erste vorbestimmte Temperaturwert ist; und
- die gemessene Windgeschwindigkeit größer oder gleich einem zweiten vorbestimmten Windgeschwindigkeitswert ist, der größer als der erste vorbestimmten Windgeschwindigkeitswert ist;
wobei das Verfahren so geartet ist, dass man die Aktivierung, die Deaktivierung und/oder den Zerstäubungsdruck von bestimmten Flüssigkeitszerstäubungsvorrichtungen abhängig von der gemessenen Windgeschwindigkeit steuert und dass man einen oder mehrere Zeitpunkte der Aktivierung und/oder der Deaktivierung der Zerstäubung und den Zerstäubungsdruck mindestens von bestimmten Zerstäubungsvorrichtungen festlegt, basierend auf einem Suchalgorithmus von Spitzen und Tälern in einer Modellierung der Windgeschwindigkeit und/oder der Windrichtung.

2. Verfahren nach Anspruch 1,
**dadurch gekennzeichnet,dass**
- die Aktivierung der Zerstäubung mindestens von bestimmten Flüssigkeitszerstäubungsvorrichtungen eingeschaltet wird, wenn außerdem eine Messung eines physikalischen Parameters bezüglich der Vielzahl der Platten größer ist als ein erster vorbestimmter Wert des physikalischen Parameters; und
- die Deaktivierung der Zerstäubung mindestens von bestimmten Flüssigkeitszerstäubungsvorrichtungen eingeschaltet wird, wenn außerdem die Messung des physikalischen Parameters kleiner oder gleich einem zweiten vorbestimmten Wert des physikalischen Parameters ist, der kleiner ist als der erste vorbestimmte Wert des physikalischen Parameters;
bei welchem:
der physikalische Parameter ein Teil einer Gruppe ist, die aufweist:
- die empfangene Sonneneinstrahlung bezüglich der Vielzahl der Platten;
- die Stromerzeugung, die durch mindestens eine Platte erzeugt wird; und
- den Strom und/oder die elektrische Spannung von mindestens einer elektrischen Vorrichtung, die auf funktionelle Weise mit mindestens einer Platte gekoppelt ist.

3. Verfahren nach einem der Ansprüche 1 bis 2
**dadurch gekennzeichnet,**
**dass** es außerdem den Schritt aufweist, der besteht aus:
- Messen der Windrichtung;
wobei das Verfahren so geartet ist, dass man außerdem steuert:
- die Aktivierung, die Deaktivierung und/oder der Zerstäubungsdruck mindestens von bestimmten Flüssigkeitszerstäubungsvorrichtungen abhängig von der gemessenen Windrichtung.

4. Verfahren nach einem der Ansprüche 1 bis 3,
**dadurch gekennzeichnet,dass**
- die Aktivierung der Zerstäubung mindestens von bestimmten Flüssigkeitszerstäubungsvorrichtungen eingeschaltet wird, wenn außerdem die Differenz zwischen einerseits der gemessenen Temperatur von mindestens einer Platte und andererseits einer Temperaturmessung der Umgebungsluft bezüglich der Vielzahl der Platten und/oder einer Messung der Temperatur der Kühlflüssigkeit vor der Zerstäubung kleiner ist als ein erster vorbestimmter Differenzwert; und
- die Deaktivierung der Zerstäubung mindestens von bestimmten Flüssigkeitszerstäubungsvorrichtungen eingeschaltet wird, wenn außerdem die Differenz zwischen einerseits der gemessenen Temperatur von mindestens einer Platte und andererseits eine Temperaturmessung der Umgebungsluft bezüglich der Vielzahl der Platten und/oder die Messung der Temperatur der Kühlflüssigkeit nach der Zerstäubung größer oder gleich einem zweiten vorbestimmten Differenzwert ist, der größer als der erste vorbestimmte Differenzwert ist.

5. Verfahren nach einem der Ansprüche 1 bis 4,
**dadurch gekennzeichnet,dass**
- die Aktivierung der Zerstäubung mindestens von bestimmten Flüssigkeitszerstäubungsvorrichtungen eingeschaltet wird, wenn außerdem eine Temperaturmessung der Umgebungsluft bezüglich der Vielzahl der Platten größer als die Erstarrungstemperatur der Kühlflüssigkeit ist; und
- die Deaktivierung der Zerstäubung mindestens von bestimmten Flüssigkeitszerstäubungsvorrichtungen eingeschaltet wird, wenn außerdem die Temperaturmessung der Umgebungsluft bezüglich der Vielzahl der Platten kleiner oder gleich der Erstarrungstemperatur der Kühlflüssigkeit ist.

6. Verfahren nach einem der Ansprüche 1 bis 5,
**dadurch gekennzeichnet,dass**
- die Aktivierung der Zerstäubung mindestens von bestimmten Flüssigkeitszerstäubungsvorrichtungen eingeschaltet wird, wenn außerdem eine Durchflussmessung des atmosphärischen Wasserniederschlags bezüglich der Vielzahl der Platten kleiner ist als ein erster vorbestimmter Durchflusswert des atmosphärischen Wasserniederschlags; und
- die Deaktivierung der Zerstäubung mindestens von bestimmten Flüssigkeitszerstäubungsvorrichtungen eingeschaltet wird, wenn außerdem die Durchflussmessung des atmosphärischen Wasserniederschlags bezüglich der Vielzahl der Platten größer ist als ein zweiter vorbestimmter Durchflusswert des atmosphärischen Wasserniederschlags, der größer als der erste vorbestimmte Durchflusswert des atmosphärischen Wasserniederschlags ist.

7. Verfahren nach einem der Ansprüche 1 bis 6,
**dadurch gekennzeichnet,dass**
die Messung der Temperatur von mindestens einer Platte auf dem Durchführen mindestens einer Messung über und mindestens einer Messung unter der Platte beruht.

8. Verfahren nach einem der Ansprüche 1 bis 7,
**dadurch gekennzeichnet,dass**
die Messung der Geschwindigkeit und der Richtung des Winds über eine vordefinierte Zeit durchgeführt wird, um statistische Werte des Winds zu bestimmen.

9. Verfahren nach einem der Ansprüche 1 bis 8,
**dadurch gekennzeichnet,dass**
die Platten der Vielzahl an Fotovoltaikplatten durch einen Raum getrennt sind, in dem die Zerstäubungsvorrichtungen angeordnet sind.

10. Vorrichtung zur thermischen Regelung einer Vielzahl von Fotovoltaikplatten (110), die dem Wind (100) ausgesetzt sind und eine Vielzahl von Flüssigkeitszerstäubungsvorrichtungen (120) aufweisen, die geeignet sind zum Aufbringen einer Kühlflüssigkeit auf die Vielzahl der Platten, wobei die Vorrichtung **dadurch gekennzeichnet ist,**
**dass** sie aufweist:
- Mittel zum Messen der Temperatur (130) von mindestens einer Fotovoltaikplatte;
- Mittel zum Messen der Windgeschwindigkeit (140);
- Mittel zur Aktivierung von mindestens einer Flüssigkeitszerstäubungsvorrichtung;
- Mittel zur Deaktivierung von mindestens einer Zerstäubungsvorrichtung;
- Mittel zum Steuern des Drucks von mindestens einer Zerstäubungsvorrichtung abhängig von einer gemessenen Windgeschwindigkeit; und
- einen Mikrocontroller, der gekoppelt ist an mindestens eines der Mittel:
- zum Messen der Temperatur von mindestens einer Fotovoltaikplatte;
- zum Messen der Windgeschwindigkeit;
- zur Aktivierung von mindestens einer Flüssigkeitszerstäubungsvorrichtung;
- zur Deaktivierung von mindestens einer Zerstäubungsvorrichtung; und
- zum Steuern des Drucks von mindestens einer Zerstäubungsvorrichtung abhängig von der gemessenen Windgeschwindigkeit;
wobei der Mikrocontroller außerdem zum Bestimmen eines oder mehrerer Zeitpunkte der Aktivierung und/oder der Deaktivierung der Zerstäubung und des Zerstäubungsdrucks mindestens von bestimmten Zerstäubungsvorrichtungen konfiguriert ist, basierend auf einem Suchalgorithmus von Spitzen und Tälern in einer Modellierung der Windgeschwindigkeit und/oder der Windrichtung.

11. Vorrichtung nach Anspruch 10,
**dadurch gekennzeichnet,**
**dass** sie außerdem aufweist, gekoppelt an den Mikrocontroller, mindestens eines der Mittel:
- zum Messen der empfangenen Sonneneinstrahlung bezüglich der Vielzahl der Platten;
- zum Messern der Stromerzeugung, die durch mindestens eine Platte erzeugt wird; und
- zum Messen des Stroms und/oder der elektrischen Spannung von mindestens einer elektrischen Vorrichtung, die auf funktionelle Weise mit mindestens einer Platte gekoppelt ist;
bei welcher:
- die Aktivierung der Zerstäubung mindestens von bestimmten Flüssigkeitszerstäubungsvorrichtungen eingeschaltet wird, wenn außerdem eine Messung eines physikalischen Parameters bezüglich der Vielzahl der Platten größer ist als ein erster vorbestimmter Wert des physikalischen Parameters; und
- die Deaktivierung der Zerstäubung mindestens von bestimmten Flüssigkeitszerstäubungsvorrichtungen eingeschaltet wird, wenn außerdem die Messung des physikalischen Parameters kleiner oder gleich einem zweiten vorbestimmten Wert des physikalischen Parameters ist, der kleiner ist als der erste vorbestimmte Wert des physikalischen Parameters;
und bei welcher:
der physikalische Parameter ein Teil einer Gruppe ist, die umfasst:
- die empfangene Sonneneinstrahlung bezüglich der Vielzahl der Platten;
- die Stromerzeugung, die durch mindestens eine Platte erzeugt wird; und
- den Strom und/oder die elektrische Spannung von mindestens einer elektrischen Vorrichtung, die auf funktionelle Weise mit mindestens einer Platte gekoppelt ist.

12. Vorrichtung nach einem der Ansprüche 10 bis 11,
**dadurch gekennzeichnet,**
**dass** sie außerdem aufweist:
- Mittel zum Messen der Windrichtung; und
- Mittel zum Steuern der Aktivierung, der Deaktivierung und/oder des Zerstäubungsdrucks von mindestens einer Flüssigkeitszerstäubungsvorrichtung abhängig von der gemessenen Windrichtung.

13. Vorrichtung nach einem der Ansprüche 10 bis 12,
**dadurch gekennzeichnet,dass**
sie außerdem zumindest Messmittel aufweist, die Teil der Gruppe sind, die umfasst:
- Mittel zur Temperaturmessung der Umgebungsluft bezüglich der Vielzahl der Platten;
- Mittel zur Temperaturmessung der Kühlflüssigkeit; und
- Mittel zur Durchflussmessung des atmosphärischen Wasserniederschlags bezüglich der Vielzahl der Platten.

14. Vorrichtung nach einem der Ansprüche 10 bis 13,
**dadurch gekennzeichnet,dass**
sie außerdem Mittel zum Speichern von mindestens einer der durch die Messmittel erhaltenen Messungen aufweist.

15. Vorrichtung nach einem der Ansprüche 10 bis 14,
**dadurch gekennzeichnet,dass**
die Zerstäubungsvorrichtungen mit einer oder mehreren Hydraulikleitungen gekoppelt sind, die ein Transportieren einer Kühlflüssigkeit ermöglichen und Teil eines Hydrauliksystems sind.

## Claims

1. Method for controlling the temperature of a plurality of photovoltaic panels (110) exposed to the wind (100) and comprising a plurality of devices for spraying a liquid (120), suitable for applying a coolant liquid onto the plurality of panels, the method being **characterised in that** it comprises the steps of:
- measuring a temperature of at least one panel;
- measuring the speed of the wind;
- activating the spraying of at least one of the devices for spraying the liquid, when:
- the measured temperature is greater than or equal to a first predetermined temperature value; and
- the measured speed of the wind is less than or equal to a first predetermined wind speed value;
- the deactivation of the spraying of all or part of the devices for spraying liquid when:
- the measured temperature is less than or equal to a second predetermined temperature value, which is less than the first predetermined temperature value; and
- the measured speed of the wind is greater than or equal to a second predetermined wind speed value, which is greater than the first predetermined wind speed value;
the method being such that the activation, deactivation, and/or spraying pressure of certain liquid spraying devices are controlled in relation to the measured speed of the wind, and that one or moments of activation and/or of deactivation of the spraying are determined, and the pressure of spraying of at least certain spraying devices, based on an algorithm of searching for peaks and troughs in a modelling of the wind speed and/or the wind direction.

2. Method according to claim 1, **characterised in that:**
- the activation of the spraying of at least certain liquid spraying devices is triggered if, in addition, a measurement of a physical parameter at the level of the plurality of panels is greater than a first predetermined value of the physical parameter; and
- the deactivation of the spraying of at least certain liquid spraying devices is triggered if, in addition, the measurement of the physical parameter is less than or equal to a second predetermined value of the physical parameter; which is lower than the first predetermined value of the physical parameter;
wherein:
the physical parameter forms part of a group comprising:
- the sunlight received at the level of the plurality of panels;
- the electricity produced by at least one panel; and,
- the electric current and/or voltage of at least one electrical device connected in a functional manner to at least one panel.

3. Method according to any one of claims 1 to 2, **characterised in that** it further comprises the stage consisting of:
- measuring the direction of the wind;
the method being such that control is further provided of:
- the activation, deactivation, and/or the pressure of spraying of at least certain liquid spraying devices, in relation to the measured direction of the wind.

4. Method according to any one of claims 1 to 3, **characterised in that:**
- the activation of the spraying of at least certain liquid spraying devices is triggered if, in addition, the difference between, on the one hand, the measured temperature of at least one panel and, on the other, a measurement of the ambient air at the level of the plurality of panels and/or a measurement of the temperature of the cooling liquid before spraying is less than a first predetermined difference value; and
- the deactivation of the spraying of at least certain liquid spraying devices is triggered if, in addition, the difference between, on the one hand, the measured temperature of at least one panel and, on the other hand, a measurement of the temperature of the ambient air at the level of the plurality of panels and/or the measurement of the temperature of the cooling liquid after spraying is greater than or equal to a second predetermined difference value, which is greater than the first predetermined difference value.

5. Method according to any one of claims 1 to 4, **characterised in that:**
- the activation of the spraying of at least certain liquid spraying devices is triggered if, in addition, a measurement of the temperature of the ambient air at the level of the plurality of panels is greater than the temperature of solidification of the cooling liquid; and
- the deactivation of the spraying of at least certain liquid spraying devices is triggered if, in addition, the measurement of the temperature of the ambient air at the level of the plurality of panels is less than or equal to the temperature of solidification of the cooling liquid.

6. Method according to any one of claims 1 to 5, **characterised in that:**
- the activation of the spraying of at least certain liquid spraying devices is triggered if, in addition, a measurement of the amount of atmospheric water precipitation at the level of the plurality of panels is less than a first predetermined value of atmospheric water precipitation; and
- the deactivation of the spraying of at least certain liquid spraying devices is triggered if, in addition, a measurement of the amount of atmospheric water precipitation at the level of the plurality of panels is greater than a second predetermined value of atmospheric water precipitation, which is greater than the first predetermined value of atmospheric water precipitation.

7. Method according to any one of claims 1 to 6, **characterised in that** the measurement of the temperature of at least one panel consists of carrying out at least one measurement above the panel and at least one measurement below it.

8. Method according to any one of claims 1 to 7, **characterised in that** the measurement of the speed and direction of the wind is carried out during a predetermined time in order to determine statistical values of the wind.

9. Method according to any one of claims 1 to 8, **characterised in that** the panels of the plurality of photovoltaic panels are separated by a space in which the spraying devices are located.

10. Device for controlling the temperature of a plurality of photovoltaic panels (110) exposed to the wind (100) and comprising a plurality of devices for spraying a liquid (120), suitable for applying a coolant liquid onto the plurality of panels, the device being **characterised in that** it comprises:
- means for measuring the temperature (130) of at least one photovoltaic panel;
- means for measuring the speed of the wind (140);
- means for activating at least one device for spraying a liquid,
- means for deactivating at least one spraying device;
- means for controlling the pressure of at least one spraying device in relation to the measured speed of the wind; and
- a microcontroller connected to at least one of the means:
- for measuring the temperature of at least one photovoltaic panel;
- for measuring the speed of the wind;
- for activation of at least one liquid spraying device;
- for deactivation of at least one spraying device; and
- for controlling the pressure of at least one spraying device in relation to the measured speed of the wind;
the microcontroller being additionally configured in order to determine one or more moments of activation and/or deactivation of the spraying and spraying pressure of at least certain spraying devices based on an algorithm of searching for peaks and troughs in a modelling of the wind speed and/or the wind direction.

11. Device according to claim 10, **characterised in that** it further comprises, connected to the microcontroller, at least one of the means for:
- measuring the sunlight received at the level of the plurality of panels;
- measuring the electricity produced by at least one panel; and,
- measuring the electric current and/or voltage of at least one electrical device connected in a functional manner to at least one panel;
wherein:
- the activation of the spraying of at least certain liquid spraying devices is triggered if, in addition, a measurement of a physical parameter at the level of the plurality of panels is greater than a first predetermined value of the physical parameter; and
- the deactivation of the spraying of at least certain liquid spraying devices is triggered if, in addition, the measurement of the physical parameter is less than or equal to a second predetermined value of the physical parameter; which is lower than the first predetermined value of the physical parameter;
and wherein:
the physical parameter forms part of a group comprising:
- the sunlight received at the level of the plurality of panels;
- the electricity produced by at least one panel; and,
- the electric current and/or voltage of at least one electrical device connected in a functional manner to at least one panel.

12. Device according to any one of claims 10 to 11, **characterised in that** it further comprises:
- means for measuring the direction of the wind; and
- means for controlling the activation, the deactivation, and/or the pressure of at least one spraying device in relation to the measured direction of the wind.

13. Device according to any one of claims 10 to 12, **characterised in that** it further comprises at least means for a measurement forming part of the group comprising:
- means for measuring the temperature of the ambient air at the level of the plurality of panels;
- means for measuring the temperature of the coolant liquid; and
- means for measuring the amount of atmospheric water precipitation at the level of the plurality of panels.

14. Device according to any one of claims 10 to 13, **characterised in that** it further comprises means for storing at least one of the measurements obtained by the measuring means.

15. Device according to any one of claims 10 to 14, **characterised in that** the spraying devices are connected to one or more hydraulic conduits, allowing for a coolant liquid to be transported and forming part of a hydraulic system.
